# EUROPEAN PATENT APPLICATION

(11) **EP 4 603 553 A1**
(43) Date of publication of application: **20.08.2025**
(21) Application number: 23877376.6
(22) Date of filing: 13.10.2023
(51) Int. Cl.: C09D 13/00, B43K 19/02

(54) **UNFIRED PENCIL LEAD**

(30) Priority: 14.10.2022 JP 2022165836
(71) Applicant: MITSUBISHI PENCIL COMPANY, LIMITED, Tokyo 140-8537 (JP)
(72) Inventor: OKUYAMA, Hiroyuki, Tokyo 140-8537 (JP)
(74) Representative: Vossius & Partner Patentanwälte Rechtsanwälte mbB
(86) International application number: PCT/JP2023/037278
(87) International publication number: WO 2024/080375

(57) **Abstract**

A non-baked pencil lead comprising a wax, a filler, a water-soluble resin, and a colorant including a pigment, wherein the pigment contains includes both C.I. Pigment Yellow 74 (PY-74) and C.I. Pigment Red 254 (PR-254), and a total proportion occupied by the PY-74 and the PR-254 in the pigment is 50 mass% or more.

## Description

### Technical Field

The present invention relates to a non-baked pencil lead.

### Background Art

Conventionally, non-baked pencil leads such as color pencil leads have aimed to have mechanical strength in addition to having a smooth writing feel and excellent colorability, as in the technique disclosed in Japanese Patent Application Laid-Open (JP-A) No. 2008-45043. On the other hand, in most cases, non-baked pencil leads include pigments as colorants. WO 2013/099730 A1 discloses C.I. Pigment Yellow 74 as an insoluble azo dye that has good storage stability of the coloring composition.

### SUMMARY OF INVENTION

### Technical Problem

A topic of an embodiment of the present disclosure is to provide a non-baked pencil lead, drawn lines thereof having lightfastness and tinting strength, and being unlikely to suffer discoloration over time.

### Solution to Problem

A non-baked pencil lead of an embodiment of the present application includes a wax, a filler and a water-soluble resin, and a colorant including a pigment, wherein the pigment includes both C.I. Pigment Yellow 74 (PY-74) and C.I. Pigment Red 254 (PR-254), and a total proportion occupied by the PY-74 and the PR-254 in the pigment is 50 mass% or more.

Herein, it is preferable that a proportion occupied by the PR-254 in a C.I.- Pigment-Red-type pigment in the pigment is 50 mass% or more.

### Advantageous Effects of Invention

Since the embodiment of the present disclosure is configured as described above, it is possible to provide a non-baked pencil lead, drawn lines thereof having lightfastness and tinting strength, and being likely to suffer discoloration over time.

### BRIEF DESCRIPTION OF DRAWINGS

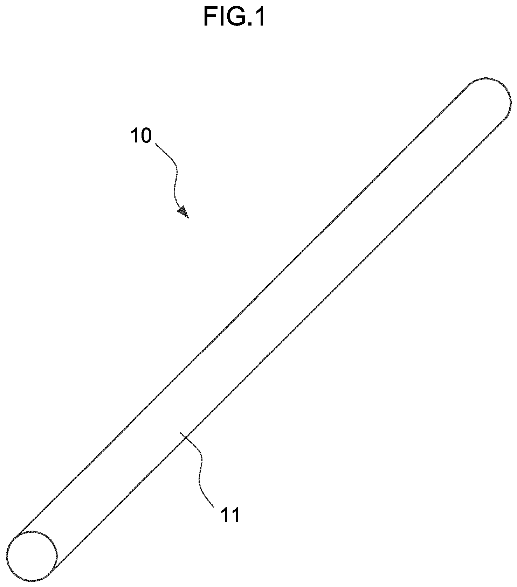

Fig. 1 is a perspective view schematically illustrating an appearance of a non-baked pencil lead of an embodiment.

### DESCRIPTION OF EMBODIMENTS

A non-baked pencil lead of an embodiment of the present application comprises a wax, a filler and a water-soluble resin, and a colorant including a pigment, wherein the pigment includes both C.I. Pigment Yellow 74 (PY-74) and C.I. Pigment Red 254 (PR-254), and a total proportion occupied by the PY-74 and the PR-254 in the pigment is 50 mass% or more.

As described above, both PY-74 and PR-254 are included as pigments. A non-baked pencil lead including both PY-74 and PR-254 as colorants has excellent lightfastness and tinting strength, and has a property (hereinafter called "color fastness") unlikely to suffer discoloration over time.

Although both PY-74 and PR-254 only may be used as the pigments, provided that the total proportion occupied by both PY-74 and PR-254 in the pigment is 50 mass% or more, one of or a mixture of two or more of other pigments, e.g., C.I. Pigment Yellow 1 (PY-1), C.I. Pigment Yellow 154 (PY-154), C.I. Pigment Red 170 (PR-170), C.I. Pigment Red 48:2 (PR-48:2), C.I. Pigment Green 7 (PG-7), C.I. Pigment Blue 15 (PB-15) and C.I. Pigment Red 122 (PR-122), may be included.

When C.I.-Pigment-Red-type pigments other than PR-254 (e.g., PR-170, PR-48:2, PR-122) are added to the pigment, in consideration of color fastness, it is preferable that the proportion occupied by PR-254 in the C.I.-Pigment-Red-type pigments is 50 mass% or more.

Other than the above-described pigments, pigments generally used in coloring of color pencils such as, for example, graphite, titanium oxide, iron black, carbon black, Prussian blue, ultramarine blue, Blue No. 1, red iron oxide, yellow iron oxide, chromium oxide, chromium hydroxide, zinc oxide, zirconium oxide, cobalt oxide, argentine, bismuth oxychloride, titanated mica, azo-type organic pigments such as disazo yellow AAA and pyrazolone orange, cyanine-type organic pigments such as phthalocyanine blue and phthalocyanine green, high grade organic pigments such as quinacridone red, dyeing pigments such as fanal colors, and fluorescent pigments, may be included as pigments other than PY-74 and PR-254.

Moreover, in addition to the above-described pigments, one of or a mixture of two or more dyes such as Blue No. 2, Blue No. 404, Red No. 2, Red No. 3, Red No. 102, Red No. 104, Red No. 105, Red No. 106, DPP Red, Yellow No. 4, Yellow No. 5, and Green No. 3 may be included as colorants.

The wax means a substance that is generally classified as a wax among structural components of non-baked pencil leads. Specifically, rosin, paraffin wax, microcrystalline wax, urushi wax, beeswax, Japan wax, montan wax, hydrogenated castor oil, hydrogenated palm oil, glycerin fatty acid esters (e.g., glyceryl stearate), polyglycerin fatty acid esters and the like can be used as the wax in the present embodiment.

The filler is a component that contributes to an improvement in the strength and an improvement in the writing performance of the non-baked pencil lead. Specifically, talc, kaolin, mica, boron nitride, calcium carbonate, potassium titanate whiskers and the like can be used as the filler in the present embodiment.

The water-soluble resin is used as a binder, and water-soluble organic polymers such as sodium carboxymethyl cellulose, ammonium carboxy cellulose, polyvinyl alcohol, methyl cellulose and the like can be used.

In addition to the above, various types of additives may be used depending on the purpose. For example, in order to improve strength, cellulose fibers serving as an additive may be a component of the non-baked pencil lead together with the above-described respective components.

The non-baked pencil lead of the present embodiment can be manufactured, for example, by the following manufacturing method. Namely, the colorant, the wax, the filler, the water-soluble resin, and, if necessary, other additives are mixed and the same mass of water is added to the mixture, and the mixture is mixed and dispersed by a kneader, and the moisture of the mixture is prepared by being kneaded by a two-roll mill. The resulting mixture obtained by the above preparation is pelletized, and is submitted to extrusion molding in a form of a pencil lead of a preferred diameter by a single-axis screw extruder. Then, by removing the moisture by drying without baking the molded lead, a non-baked pencil lead 10 having a core body 11 of a substantially cylindrical shape such as illustrated in Fig. 1 is obtained.

Drawn lines by the non-baked pencil lead manufactured as described above have lightfastness and tinting strength, and are unlikely to suffer discoloration over time.

### EXAMPLES

### (1) Orange-Toned Non-baked Pencil Lead

### (1-1) Raw Material Composition

Non-baked pencil leads, which exhibited an orange tone by including only a C.I.-Pigment-Yellow-type pigment and a C.I.-Pigment-Red-type pigment as the colorants, were verified for lightfastness, tinting strength and color fastness. Note that the raw material compositions of Examples 1 to 3 and Comparative Examples 1 and 2 described hereinafter were as listed in following Table 1.

**[Table 1]**

| raw material | | content (mass%) |
|---|---|---|
| colorant (pigment) | | 10 |
| wax | glyceryl stearate | 33 |
| | rosin | 2 |
| water-soluble resin | carboxymethyl cellulose sodium salt | 4 |
| filler | talc | 51 |

Note that, in above Table 1, Poem V-200 (Riken Vitamin, melting point 61°C) was used as the glyceryl stearate, F10MC (Nippon Paper Industries) was used as the carboxymethyl cellulose sodium salt, and High Micron (Takehara Kagaku Kogyo) was used as the talc. Further, a melting point of the rosin was 76°C.

### (1-2) Pigment Composition

Details of pigment compositions of above Table 1 in Examples 1 to 3 and Comparative Examples 1 and 2 were as shown in following Table 2. All of the pigments in following Table 2 were manufactured by DCL.

**[Table 2]**

| Example / Comparative Example | pigment content (mass%) | | | | | |
|---|---|---|---|---|---|---|
| | PY-74 | PR-254 | PY-1 | PY-154 | PR-170 | PR-48:2 |
| Ex. 1 | 1 | 9 | | | | |
| Ex. 2 | 5 | 5 | | | | |
| Ex. 3 | 9 | 1 | | | | |
| Comp. Ex. 1 | | | 5 | | 5 | |
| Comp. Ex. 2 | 5 | | | | 5 | |

### (1-3) Manufacturing Method

Non-baked pencil leads of Examples 1 to 3 and Comparative Examples 1 and 2 were manufactured in accordance with the above-described compositions, by the method of manufacturing described in the above embodiment.

The non-baked pencil leads of Examples 1 to 3 and Comparative Examples 1 and 2 all included only a C.I.-Pigment-Yellow-type pigment and a C.I.-Pigment-Red-type pigment and were toned orange. Due to the ratio of the PY-74 and the PR-254 in Examples 1 to 3, Example 1 exhibited a red-dominant orange tone, Example 2 exhibited a yellow-dominant orange tone, and Example 2 exhibited an intermediate tone between Example 1 and Example 3. Further, Examples 1 to 3 included both PY-74 and PR-254, and the total content of the PY-74 and PR-254 in the pigment was 100 mass%, which was 50 mass% or more. On the other hand, in Comparative Examples 1 and 2, neither PY-74 nor PR-254 was included (Comparative Example 1), or only either one thereof (specifically, PY-74) was included (Comparative Example 2), and these were not non-baked pencil leads including both PY-74 and PR-254.

### (1-4) Evaluation Methods

The non-baked pencil leads of Examples 1 to 3 and Comparative Examples 1 and 2 were evaluated for lightfastness and color fastness. Details thereof were as follows.

### (1-4-1) Drawn Line

The drawn lines subjected to evaluation were prepared by the method described in 8.9(a) of JIS S 6006:2020. Specifically, the drawn lines were prepared by uniformly smearing over a paper surface of a drawing paper (base weight 78.3 g/m² - 205 g/m², brightness 75% or more), under which a smooth glass surface was laid, by moving the non-baked pencil lead by hand reciprocally left and right, and up and down.

### (1-4-2) Lightfastness

Lightfastness was evaluated as follows. First, the fastness of the drawn lines as described above by the non-baked pencil lead was visually confirmed in accordance with the third exposure method of JIS L 0841:2021, 7-3-c, and drawn lines with no discoloration were evaluated as "A", drawn lines with slight discoloration were evaluated as "B", and drawn lines with great discoloration were evaluated as "C".

### (1-4-3) Color Fastness

Color fastness was evaluated as follows. First, L*a*b* values of the drawn lines as described above by the non-baked pencil lead immediately after manufacture were measured by a color meter (SC-P, Suga Test Instruments Co., Ltd.). Next, L*a*b* values were similarly measured after test papers, on which the lines were drawn, were stored in a dark place for one week in an environment of a temperature of 23°C and a humidity of 65%. Then, ΔE values derived from the L*a*b* values of before and after storage were evaluated as A if less than 4, and evaluated as B if 4 or more. In other words, the difficulty of discoloration over time after the lines were drawn was evaluated in this color fastness item.

### (1-5) Results of Evaluation

The results of evaluating the lightfastness and color fastness of the non-baked pencil leads of Examples 1 to 3 and Comparative Examples 1 and 2 were as shown in following Table 3.

**[Table 3]**

| Example / Comparative Example | including both PY-74 + PR-254 | proportion (mass%) of PY-74 + PR-254 in pigment | color tone | light-fastness | color fastness |
|---|---|---|---|---|---|
| Ex. 1 | Yes | 100 | orange | A | A |
| Ex. 2 | Yes | 100 | orange | A | A |
| Ex. 3 | Yes | 100 | orange | A | A |
| Comp. Ex. 1 | No | 0 | orange | B | A |
| Comp. Ex. 2 | only PY-74 | 50 | orange | A | B |

As shown in above Table 3, Examples 1 to 3 exhibited the excellent effects of A for both evaluated items. In contrast, both evaluated items of the non-baked pencil leads of Comparative Examples 1 and 2 were B or C, which are inferior evaluations.

Thereby, it was found that lightfastness and color fastness were improved due to the orange-toned non-baked pencil leads including both PY-74 and PR-254 as the pigment and the total content of the PY-74 and PR-254 in the pigment being 50 mass% or more.

### (2) Non-baked Pencil Leads Other than Orange Tone

### (2-1) Raw Material Composition

Non-baked pencil leads, which exhibited color tones other than an orange tone by including pigments of other hue groups as colorants in addition to a C.I.-Pigment-Yellow-type pigment and a C.I.-Pigment-Red-type pigment, were verified for lightfastness, tinting strength, and color fastness. Note that the raw material compositions of Examples 4 to 6 and Comparative Example 3 described hereinafter were as per above Table 1.

### (2-2) Pigment Composition

Details of the pigment composition of above Table 1 in Examples 4 to 6 and Comparative Example 3 were as shown in following Table 4. All of the pigments in following Table 4 were manufactured by DCL.

**[Table 4]**

| Example / Comparative Example | pigment content (mass%) | | | | | | | |
|---|---|---|---|---|---|---|---|---|
| | PY-74 | PR-254 | PY-154 | PR-170 | PR-48:2 | PG-7 | PB-15 | PR-122 |
| Ex. 4 | 6 | 3 | | | | 1 | | |
| Ex. 5 | 3 | 2 | | | | | 5 | |
| Ex. 6 | 3 | 3 | | | | | | 4 |
| Comp. Ex. 3 | 4 | | | 2 | | 4 | | |

### (2-3) Manufacturing Method

Non-baked pencil leads of Examples 4 to 6 and Comparative Example 3 were manufactured in accordance with the above-described compositions, by the method of manufacturing described in the above embodiment.

The non-baked pencil leads of Examples 4 to 6 and Comparative Example 3 all included a pigment of another hue group in addition to a C.I.-Pigment-Yellow-type pigment and a C.I.-Pigment-Red-type pigment, and all were toned other than orange. Namely, Example 4 and Comparative Example 3 exhibited a green color due to PG-7, Example 5 exhibited a light blue color due to PB-15, and Example 6 exhibited a reddish violet color due to PR-122. Further, Examples 4 to 6 included both PY-74 and PR-254, and in all, the total content of the PY-74 and PR-254 in the pigment was 50 mass% or more. On the other hand, Comparative Example 3 included only PY-74, and was not a non-baked pencil lead including both PY-74 and PR-254.

### (2-4) Evaluation Methods

The non-baked pencil leads of Examples 4 to 6 and Comparative Example 3 were evaluated for lightfastness and color fastness. Details thereof were as per above (1-4).

### (2-5) Results of Evaluation

The results of evaluating the lightfastness and color fastness of the non-baked pencil leads of Examples 4 to 6 and Comparative Example 3 were as shown in following Table 5.

**[Table 5]**

| Example / Comparative Example | including both PY-74 + PR-254 | proportion (mass%) of PY-74 + PR-254 in pigment | color tone | light-fastness | color fastness |
|---|---|---|---|---|---|
| Ex. 4 | Yes | 90 | green | A | A |
| Ex. 5 | Yes | 50 | light blue | A | A |
| Ex. 6 | Yes | 60 | reddish violet | A | A |
| Comp. Ex. 5 | only PY-74 | 40 | green | A | B |

As shown in Table 5, Examples 4 to 6 exhibited the excellent effects of A for both evaluated items. In contrast, the color fastness of the non-baked pencil lead of Comparative Example 3 was B or C, which was an inferior evaluation.

Thereby, it was found that lightfastness, colorability and color fastness were improved also in non-baked pencil leads that are other than an orange- tone including both PY-74 and PR-254 as the pigment and the total content of the PY-74 and PR-254 in the pigment being 50 mass% or more.

### (3) Cases in which Color is Deep

### (3-1) Raw Material Composition

Orange-toned non-baked pencil leads, in which the content of the pigment was relatively large and the color of the lead was relatively deep, were measured for changes in the color tone. Note that the raw material compositions of Examples 7 to 11 and Comparative Examples 4 to 8 described hereinafter were as per above Table 1.

### (3-2) Pigment Composition

Details of the pigment composition of above Table 1 in Examples 7 to 11 and Comparative Examples 4 to 8 were as shown in following Table 6.

**[Table 6]**

| Example / Comparative Example | pigment content (mass%) | | |
|---|---|---|---|
| | PY-74 | PR-254 | PR-170 |
| Ex. 7 | 0.5 | 9.5 | |
| Ex. 8 | 5 | 5 | |
| Ex. 9 | 7.5 | 2.5 | |
| Ex. 10 | 8.3 | 1.7 | |
| Ex. 11 | 9.5 | 0.5 | |
| Comp. Ex. 4 | 0.5 | | 9.5 |
| Comp. Ex. 5 | 5 | | 5 |
| Comp. Ex. 6 | 7.5 | | 2.5 |
| Comp. Ex. 7 | 8.3 | | 1.7 |
| Comp. Ex. 8 | 9.5 | | 0.5 |

### (3-3) Manufacturing Method

Non-baked pencil leads of Examples 7 to 11 and Comparative Examples 4 to 8 were manufactured in accordance with the above-described compositions, by the method of manufacturing described in the above embodiment.

Examples 7 to 11 included both PY-74 and PR-254, and the total content of the PY-74 and PR-254 in the pigment was 100 mass%, which was 50 mass% or more. On the other hand, in Comparative Examples 4 to 8, the PR-254 of Examples 7 to 11 was substituted with the same content of PR-170. Comparative Examples 4 to 8 were thereby non-baked pencil leads including only PY-74.

### (3-4) Hue Measuring Method

The non-baked pencil leads of Examples 7 to 11 and Comparative Examples 4 to 8 were evaluated for color fastness. Namely, the L*a*b* values and L*C*H* values of lines drawn as described above by the non-baked pencil leads immediately after manufacture were measured by using a color meter (SC-P, Suga Test Instruments Co., Ltd.). Next, the L*a*b* values and L*C*H* values were similarly measured after test papers, on which these lines were drawn, were stored in a dark place for one week in an environment of a temperature of 23°C and a humidity of 65%. Then, ΔE values were derived from the L*a*b* values of before and after storage, and ΔH values were derived from the L*C*H* values of before and after storage.

### (3-5) Results

The results of measuring the hues of the non-baked pencil leads of Examples 7 to 11 and Comparative Examples 4 to 8 were as shown in following Table 7. Note that the L* values, the a* values, the b* values, the C* values and the H* values in the following table are only the values that were measured before storage.

**[Table 7]**

| Ex. / Comp. Ex. | including both PY-74 + PR-254 | proportion (mass%) of PY-74 + PR-254 in pigment | L* | a* | b* | C* | H* | ΔE | ΔH |
|---|---|---|---|---|---|---|---|---|---|
| Ex. 7 | Yes | 100 | 54 | 60 | 38 | 71 | 32 | 1.5 | 1.6 |
| Ex. 8 | Yes | 100 | 56 | 54 | 43 | 69 | 39 | 1.6 | 1.5 |
| Ex. 9 | Yes | 100 | 60 | 48 | 52 | 71 | 47 | 1.4 | 1.3 |
| Ex. 10 | Yes | 100 | 65 | 34 | 68 | 76 | 63 | 1.2 | 1.2 |
| Ex. 11 | Yes | 100 | 78 | 3 | 80 | 78 | 80 | 1.3 | 1.1 |
| Comp. Ex. 4 | only PY-74 | 5 | 52 | 61 | 24 | 66 | 21 | 4.5 | 4.5 |
| Comp. Ex. 5 | only PY-74 | 50 | 54 | 55 | 32 | 64 | 30 | 5.5 | 6 |
| Comp. Ex. 6 | only PY-74 | 75 | 58 | 49 | 46 | 67 | 43 | 5.7 | 6.2 |
| Comp. Ex. 7 | only PY-74 | 83 | 63 | 35 | 65 | 74 | 62 | 5.5 | 6 |
| Comp. Ex. 8 | only PY-74 | 95 | 77 | 6 | 76 | 77 | 76 | 4.4 | 4.5 |

As shown in above Table 7, in all of the Examples, there was the result that the ΔE values and the ΔH values were lower than in all of the Comparative Examples. Accordingly, it was found that the dark-orange-toned non-baked pencil leads were unlikely to suffer discoloration over time by including both PY-74 and PR-254 and the total content of the PY-74 and PR-254 in the pigment being 50 mass% or more.

### (4) Cases in which Color is Intermediate

### (4-1) Raw Material Composition

Changes in the color tone of orange-toned non-baked pencil leads, at which the content of the pigment was made to be 1/4 of that of above (3) and the color of the lead was a medium depth, were measured. Note that, in the raw material compositions of Examples 12 to 16 and Comparative Examples 13 to 17 described hereinafter, the pigment content of above Table 1 was 2.5 mass%, and accompanying this, the content of the talc was increased by 7.5 mass% and became 58.5 mass%.

### (4-2) Pigment Composition

Details of the pigment compositions of Examples 12 to 16 and Comparative Examples 9 to 13 are shown in following Table 8.

**[Table 8]**

| Example / Comparative Example | pigment content (mass%) | | |
|---|---|---|---|
| | PY-74 | PR-254 | PR-170 |
| Ex. 12 | 0.125 | 2.375 | |
| Ex. 13 | 1.25 | 1.25 | |
| Ex. 14 | 1.875 | 0.625 | |
| Ex. 15 | 2.075 | 0.425 | |
| Ex. 16 | 2.375 | 0.125 | |
| Comp. Ex. 9 | 0.125 | | 2.375 |
| Comp. Ex. 10 | 1.25 | | 1.25 |
| Comp. Ex. 11 | 1.875 | | 0.625 |
| Comp. Ex. 12 | 2.075 | | 0.425 |
| Comp. Ex. 13 | 2.375 | | 0.125 |

### (4-3) Manufacturing Method

Non-baked pencil leads of Examples 12 to 16 and Comparative Examples 9 to 13 were manufactured on the basis of the above-described compositions, by the method of manufacturing described in the above embodiment.

Examples 12 to 16 included both PY-74 and PR-254, and in all, the total content of the PY-74 and PR-254 in the pigment was 100 mass%, which was 50 mass% or more. On the other hand, in Comparative Examples 9 to 13, the PR-254 of Examples 12 to 16 was substituted with the same content of PR-170. Comparative Examples 9 to 13 were thereby non-baked pencil leads including only PY-74.

### (4-4) Hue Measuring Method and Results

Color fastness of the non-baked pencil leads of Examples 12 to 16 and Comparative Examples 9 to 13 was evaluated in the same way as in above (3-4). The results thereof are shown in following Table 9. Note that the L* values, the a* values, the b* values, the C* values and the H* values in the following table are only the values that were measured before storage.

**[Table 9]**

| Ex. / Comp. Ex. | including both PY-74 + PR-254 | proportion (mass%) of PY-74 + PR-254 in pigment | L* | a* | b* | C* | H* | ΔE | ΔH |
|---|---|---|---|---|---|---|---|---|---|
| Ex. 12 | Yes | 100 | 60 | 48 | 32 | 58 | 34 | 1.5 | 1.5 |
| Ex. 13 | Yes | 100 | 61 | 47 | 35 | 59 | 37 | 1.2 | 1.6 |
| Ex. 14 | Yes | 100 | 63 | 42 | 47 | 63 | 48 | 1.5 | 1.3 |
| Ex. 15 | Yes | 100 | 66 | 33 | 55 | 64 | 59 | 1.3 | 1.1 |
| Ex. 16 | Yes | 100 | 77 | 2.8 | 73 | 76 | 73 | 1.2 | 1.2 |
| Comp. Ex. 9 | only PY-74 | 5 | 52 | 47 | 27 | 54 | 30 | 4.2 | 4.2 |
| Comp. Ex. 10 | only PY-74 | 50 | 58 | 45 | 30 | 54 | 34 | 5.8 | 6 |
| Comp. Ex. 11 | only PY-74 | 75 | 60 | 41 | 44 | 60 | 47 | 5.6 | 5.7 |
| Comp. Ex. 12 | only PY-74 | 83 | 61 | 32 | 53 | 62 | 59 | 5.7 | 5.5 |
| Comp. Ex. 13 | only PY-74 | 95 | 76 | 5 | 71 | 74 | 71 | 4.4 | 4.3 |

As shown in above Table 9, in all of the Examples, there was the result that the ΔE values and the ΔH values were lower than in all of the Comparative Examples. Accordingly, it can be understood that, due to the dark-orange-toned non-baked pencil leads including both PY-74 and PR-254 and the total content of the PY-74 and PR-254 in the pigment being 50 mass% or more, it is difficult for discoloration over time to occur.

### (5) Cases in which Color is Light

### (5-1) Raw Material Composition

Changes in the color tone of orange-toned non-baked pencil leads, at which the content of the pigment was made to be 1/20 of that of above (3) and the color of the lead was light, were measured. Note that, in the raw material compositions of Examples 17 to 21 and Comparative Examples 18 to 22 described hereinafter, the pigment content of above Table 1 was 0.5 mass%, and accompanying this, the content of the talc was increased by 9.5 mass% and became 60.5 mass%.

### (5-2) Pigment Composition

Details of the pigment compositions of Examples 17 to 21 and Comparative Examples 14 to 18 are shown in following Table 10.

**[Table 10]**

| Example / Comparative Example | pigment content (mass%) | | |
|---|---|---|---|
| | PY-74 | PR-254 | PR-170 |
| Ex. 17 | 0.025 | 0.475 | |
| Ex. 18 | 0.25 | 0.25 | |
| Ex. 19 | 0.375 | 0.125 | |
| Ex. 20 | 0.415 | 0.085 | |
| Ex. 21 | 0.475 | 0.025 | |
| Comp. Ex. 14 | 0.025 | | 0.475 |
| Comp. Ex. 15 | 0.25 | | 0.25 |
| Comp. Ex. 16 | 0.375 | | 0.125 |
| Comp. Ex. 17 | 0.415 | | 0.085 |
| Comp. Ex. 18 | 0.475 | | 0.025 |

### (5-3) Manufacturing Method

Non-baked pencil leads of Examples 17 to 21 and Comparative Examples 14 to 18 were manufactured on the basis of the above-described compositions, by the method of manufacturing described in the above embodiment.

Examples 17 to 21 included both PY-74 and PR-254, and in all, the total content of the PY-74 and PR-254 in the pigment was 100 mass%, which was 50 mass% or more. On the other hand, in Comparative Examples 14 to 18, the PR-254 of Examples 17 to 21 was substituted with the same content of PR-170. Comparative Examples 14 to 18 were thereby non-baked pencil leads including only PY-74.

### (5-4) Hue Measuring Method and Results

Color fastness of the non-baked pencil leads of Examples 17 to 21 and Comparative Examples 14 to 18 was evaluated in the same way as in above (3-4). The results thereof are shown in following Table 11. Note that the L* values, the a* values, the b* values, the C* values and the H* values in the following table are only the values that were measured before storage.

**[Table 11]**

| Ex. / Comp. Ex. | including both PY-74 + PR-254 | proportion (mass%) of PY-74 + PR-254 in pigment | L* | a* | b* | C* | H* | ΔE | ΔH |
|---|---|---|---|---|---|---|---|---|---|
| Ex. 17 | Yes | 100 | 70 | 33 | 23 | 40 | 35 | 1.5 | 1.3 |
| Ex. 18 | Yes | 100 | 72 | 29 | 25 | 38 | 41 | 1.4 | 1.6 |
| Ex. 19 | Yes | 100 | 73 | 25 | 30 | 39 | 50 | 1.1 | 1.4 |
| Ex. 20 | Yes | 100 | 75 | 21 | 34 | 40 | 58 | 1.4 | 1.1 |
| Ex. 21 | Yes | 100 | 82 | 2 | 43 | 82 | 43 | 1.2 | 1.4 |
| Comp. Ex. 14 | only PY-74 | 5 | 69 | 31 | 21 | 37 | 34 | 4.1 | 4.1 |
| Comp. Ex. 15 | only PY-74 | 50 | 71 | 27 | 23 | 35 | 40 | 5.7 | 5.5 |
| Comp. Ex. 16 | only PY-74 | 75 | 73 | 23 | 28 | 36 | 51 | 5.5 | 5.6 |
| Comp. Ex. 17 | only PY-74 | 83 | 74 | 20 | 32 | 38 | 58 | 5.4 | 5.5 |
| Comp. Ex. 18 | only PY-74 | 95 | 81 | 4 | 40 | 81 | 40 | 4.2 | 4.1 |

As shown in above Table 11, in all of the Examples, there was the result that the ΔE values and the ΔH values were lower than in all of the Comparative Examples. Accordingly, it can be understood that, due to the dark-orange-toned non-baked pencil leads including both PY-74 and PR-254 and the total content of the PY-74 and PR-254 in the pigment being 50 mass% or more, it is difficult for discoloration over time to occur.

### (6) Cases in which Brightness is Low

### (6-1) Raw Material Composition

Changes in the color tone of orange-toned non-baked pencil leads, whose brightness was made to be low due to the inclusion of, in addition to a C.I.-Pigment-Yellow-type pigment and a C.I.-Pigment-Red-type pigment, a small amount of a pigment of another hue group as a colorant, were measured. Note that, in the raw material compositions of Examples 22 to 24 and Comparative Examples 23 to 25 described hereinafter, the pigment content of above Table 1 was 4.5 mass%, and accompanying this, the content of the talc was increased by 5.5 mass% and became 56.5 mass%.

### (6-2) Pigment Composition

Details of the pigment compositions of Examples 22 to 24 and Comparative Examples 19 to 21 are shown in following Table 12.

**[Table 12]**

| Example / Comparative Example | pigment content (mass%) | | | | | |
|---|---|---|---|---|---|---|
| | PY-74 | PR-254 | PR-122 | PG-7 | PB-15 | PR-170 |
| Ex. 22 | 2 | 2 | 0.5 | | | |
| Ex. 23 | 2 | 2 | | 0.5 | | |
| Ex. 24 | 2 | 2 | | | 0.5 | |
| Comp. Ex. 19 | 2 | | 0.5 | | | 2 |
| Comp. Ex. 20 | 2 | | | 0.5 | | 2 |
| Comp. Ex. 21 | 2 | | | | 0.5 | 2 |

### (6-3) Manufacturing Method

Non-baked pencil leads of Examples 22 to 24 and Comparative Examples 19 to 21 were manufactured on the basis of the above-described compositions, by the method of manufacturing described in the above embodiment.

Examples 22 to 24 included both PY-74 and PR-254, and in all, the total content of the PY-74 and PR-254 in the pigment was 88.9 mass%, which was greater than 50 mass%. On the other hand, in Comparative Examples 19 to 21, the PR-254 of Examples 22 to 24 was substituted with the same content of PR-170. Comparative Examples 19 to 21 were thereby non-baked pencil leads including only PY-74.

### (6-4) Hue Measuring Method and Results

Color fastness of the non-baked pencil leads of Examples 22 to 24 and Comparative Examples 19 to 21 was evaluated in the same way as in above (3-4). The results thereof are shown in following Table 13. Note that the L* values, the a* values, the b* values, the C* values and the H* values in the following table are only the values that were measured before storage.

**[Table 13]**

| Ex. / Comp. Ex. | including both PY-74 + PR-254 | proportion (mass%) of PY-74 + PR-254 in pigment | L* | a* | b* | C* | H* | ΔE | ΔH |
|---|---|---|---|---|---|---|---|---|---|
| Ex. 22 | Yes | 88.9 | 50 | 45 | 30 | 54 | 34 | 1.4 | 1.3 |
| Ex. 23 | Yes | 88.9 | 40 | 30 | 25 | 39 | 40 | 1 | 1.1 |
| Ex. 24 | Yes | 88.9 | 35 | 28 | 15 | 32 | 28 | 1 | 0.9 |
| Comp. Ex. 19 | only PY-74 | 44.4 | 45 | 43 | 26 | 50 | 31 | 5.4 | 5.5 |
| Comp. Ex. 20 | only PY-74 | 44.4 | 40 | 29 | 22 | 36 | 37 | 5.3 | 5.2 |
| Comp. Ex. 21 | only PY-74 | 44.4 | 35 | 27 | 13 | 30 | 26 | 5.1 | 5.2 |

As shown in above Table 13, in all of the Examples, there was the result that the ΔE values and the ΔH values were lower than in all of the Comparative Examples. Accordingly, it can be understood that, due to the low-brightness, orange-toned non-baked pencil leads including both PY-74 and PR-254 and the total content of the PY-74 and PR-254 in the pigment being 50 mass% or more, it is difficult for discoloration over time to occur.

### (7) Verification of PR-254 Content

### (7-1) Raw Material Composition

The effects of the PR-254 content in the C.I.-Pigment-Red-type pigment were verified by measuring changes in the color tone as described hereinafter. Note that the raw material compositions of Examples 25 to 27 and Comparative Examples 22 and 23 described hereinafter are as per above Table 1.

### (7-2) Pigment Composition

Details of the pigment compositions of Examples 25 to 27 and Comparative Examples 22 and 23 are shown in following Table 14.

**[Table 14]**

| Example / Comparative Example | pigment content (mass%) | | |
|---|---|---|---|
| | PY-74 | PR-254 | PR-170 |
| Ex. 25 | 2.5 | 7.5 | |
| Ex. 26 | 2.5 | 5.25 | 2.25 |
| Ex. 27 | 2.5 | 3.75 | 3.75 |
| Comp. Ex. 22 | 2.5 | | 7.5 |
| Comp. Ex. 23 | 2.5 | 2.25 | 5.25 |

### (7-3) Manufacturing Method

Non-baked pencil leads of Examples 25 to 27 and Comparative Examples 22 and 23 were manufactured on the basis of the above-described compositions, by the method of manufacturing described in the above embodiment.

In all of Examples 25 to 27, the content of PR-254 in the red pigment was 50 mass% or more. On the other hand, in both Comparative Examples 22 and 23, the content of PR-254 in the red pigment was less than 50 mass%.

### (7-4) Hue Measuring Method and Results

Color fastness of the non-baked pencil leads of Examples 25 to 27 and Comparative Examples 22 and 23 was evaluated in the same way as in above (3-4). The results thereof are shown in following Table 15. Note that the L* values, the a* values, the b* values, the C* values and the H* values in the following table are only the values that were measured before storage.

**[Table 15]**

| Ex. / Comp. Ex. | including both PY-74 + PR-254 | proportion (mass%) of PY-74 + PR-254 in pigment | proportion (mass%) of PR-254 in red pigment | L* | a* | b* | C* | H* | ΔE | ΔH |
|---|---|---|---|---|---|---|---|---|---|---|
| Ex. 25 | Yes | 100.0 | 100 | 55 | 57 | 41 | 70 | 36 | 1.9 | 1.8 |
| Ex. 26 | Yes | 77.5 | 70 | 54.7 | 56.5 | 40.6 | 70 | 36 | 2.4 | 1.9 |
| Ex. 27 | Yes | 62.5 | 50 | 54.5 | 56 | 40.1 | 69 | 36 | 3.5 | 2.5 |
| Comp. Ex. 22 | only PY-74 | 25.0 | 0 | 51 | 58 | 28 | 64 | 26 | 6.1 | 6.3 |
| Comp. Ex. 23 | only PY-74 | 47.5 | 30 | 51.6 | 58.4 | 29.2 | 65 | 27 | 4.8 | 5 |

As shown in above Table 15, in all of the Examples, there was the result that the ΔE values and the ΔH values were lower than in all of the Comparative Examples. Accordingly, it can be understood that, due to the content of PR-254 in the red pigment being 50 mass% or more, it is difficult for discoloration over time to occur.

### (8) Verification of Total Content of PY-74 and PR-254

### (8-1) Raw Material Composition

Effects of the total content of PY-74 and PR-254 in the entire content were verified by measuring changes in the color tone as described hereinafter. Note that the raw material compositions of Examples 8, 28 and 29 and of Comparative Examples 5, 24 and 25 described hereinafter, are as per above Table 1. Here, Example 8 and Comparative Example 5 are the same as those described in above (3).

### (8-2) Pigment Composition

Details of the pigment compositions of Examples 8, 28 and 29 and Comparative Examples 5, 24 and 25 are shown in following Table 16.

**[Table 16]**

| Example / Comparative Example | pigment content (mass%) | | | |
|---|---|---|---|---|
| | PY-74 | PR-254 | PY-154 | PR-170 |
| Ex. 8 | 5 | 5 | | |
| Ex. 28 | 3.5 | 3.5 | 1.5 | 1.5 |
| Ex. 29 | 2.5 | 2.5 | 2.5 | 2.5 |
| Comp. Ex. 5 | 5 | | | 5 |
| Comp. Ex. 24 | 2 | 2 | 3 | 3 |
| Comp. Ex. 25 | 1.5 | 1.5 | 3.5 | 3.5 |

### (8-3) Manufacturing Method

Non-baked pencil leads of Examples 8, 28 and 29 and Comparative Examples 5, 24 and 25 were manufactured on the basis of the above-described compositions, by the method of manufacturing described in the above embodiment.

Examples 8, 28 and 29 included both PY-74 and PR-254, and in all, the total content of the PY-74 and PR-254 in the pigment was 50 mass% or more. Comparative Example 5 included PY-74, but did not include PR-254. Comparative Examples 24 and 25 included both PY-74 and PR-254, but in both, the total content of the PY-74 and PR-254 in the pigment was less than 50%.

### (8-4) Hue Measuring Method and Results

Color fastness of the non-baked pencil leads of Examples 8, 28 and 29 and Comparative Examples 5, 24 and 25 was evaluated in the same way as in above (3-4). The results thereof are shown in following Table 13. Note that the L* values, the a* values, the b* values, the C* values and the H* values in the following table are only the values that were measured before storage.

**[Table 17]**

| Ex. / Comp. Ex. | including both PY-74 + PR-254 | proportion (mass%) of PY-74 + PR-254 in pigment | proportion (mass%) of PR-254 in red pigment | L* | a* | b* | C* | H* | ΔE | ΔH |
|---|---|---|---|---|---|---|---|---|---|---|
| Ex. 8 | Yes | 100.0 | 100 | 56 | 54 | 43 | 69 | 39 | 1.6 | 1.5 |
| Ex. 28 | Yes | 70.0 | 70 | 55.5 | 53.5 | 41 | 67 | 37 | 2.6 | 2.5 |
| Ex. 29 | Yes | 50.0 | 50 | 55 | 53 | 39 | 66 | 36 | 3.8 | 3.9 |
| Comp. Ex. 5 | only PY-74 | 50.0 | 0 | 54 | 55 | 32 | 64 | 30 | 5.5 | 6 |
| Comp. Ex. 24 | Yes | 40.0 | 40 | 54.7 | 54 | 37 | 65 | 34 | 4.1 | 4.1 |
| Comp. Ex. 25 | Yes | 30.0 | 30 | 54.4 | 54.5 | 35 | 65 | 33 | 4.6 | 4.7 |

As shown in above Table 17, in all of the Examples, there was the result that the ΔE values and the ΔH values were lower than in all of the Comparative Examples. Accordingly, it can be understood that, in a case in which both PY-74 and PR-254 are included, due to the total content of the PY-74 and PR-254 in the pigment being 50 mass% or more, it is difficult for discoloration over time to occur.

### Industrial Applicability

The present invention can be utilized as a non-baked pencil lead.

## Claims

1. A non-baked pencil lead comprising a wax, a filler, a water-soluble resin, and a colorant including a pigment
wherein the pigment includes both C.I. Pigment Yellow 74 (PY-74) and C.I. Pigment Red 254 (PR-254), and a total proportion occupied by the PY-74 and the PR-254 in the pigment is 50 mass% or more.

2. The non-baked pencil lead of Claim 1, wherein a proportion occupied by the PR-254 in a C.I.-Pigment-Red-type pigment in the pigment is 50 mass% or more.
